# EUROPÄISCHE PATENTANMELDUNG

(11) **EP 1 029 809 A1**
(43) Veröffentlichungstag der Anmeldung: **23.08.2000**
(21) Anmeldenummer: 99121627.6
(22) Anmeldetag: 30.10.1999
(51) Int. Cl.: B65D 83/70

(54) **Aerosolbehälter mit Überdrucksicherungssystem**

(30) Priorität: 17.02.1999 DE 19906576
(71) Anmelder: Wella Aktiengesellschaft, 64274 Darmstadt (DE)
(72) Erfinder: Kohn, Udo, 64807 Dieburg (DE); Pohler, Andreas, 64569 Nauheim (DE)

(57) **Zusammenfassung**

Um bei einem Aerosolbehälter 2 einen, infolge einer ungewünschten Erwärmung entstandenen, zu hohen Innendruck im Innenraum 11 kontrolliert abzubauen, wird eine Dichtungsschwachstelle 10 im Bereich einer Dichtung 3 zwischen einer ringförmigen Stirnfläche 4 des Behälterhalses 1 und dem Rand 7 eines Ventiltellers 5 vorgeschlagen, durch die Produkt aus dem Aerosolbehälter 2 entweichen kann. An der Innenfläche 12 des Behälterhalses 1 ist ein vom Innenraum 11 zur Dichtungsschwachstelle 10 hin verlaufender Kanal 13 für das ausströmende Produkt vorgesehen. Die Dichtungsschwachstelle 10 kann mittels einer Aussparung 14 in der Stirnfläche 4 oder mittels einer Unterbrechung 16 in einer Dichtnase 17 realisiert werden.

## Beschreibung

Die Erfindung betrifft einen Aerosolbehälter mit einem Behälterhals, einem Ventilteller am Behälterhals, einer umlaufenden Dichtung zwischen einer ringförmigen Stirnfläche des Behälterhalses und dem Rand des Ventiltellers, einer Dichtungsschwachstelle im Bereich der Dichtung, sowie einem Ventil am Ventilteller.

Beim Erwärmen eines Aerosolbehälters steigt dessen Innendruck an. Bei zu hohem Innendruck kann es zu einem unkontrollierten Absprengen des Ventiltellers vom Aerosolbehälter kommen. Deshalb sind Sicherungssysteme entwickelt worden, die ein kontrolliertes Ablassen von Überdruck aus dem Aerosolbehälter erlauben.

Aus der US 5,199,615 ist ein Aerosolbehälter mit einem derartigen Sicherungssystem bekannt. Bei diesem Behälter sind Dichtungsschwachstellen dadurch erzeugt, daß die Dichtungsbreite an mehreren Stellen der Dichtung durch einen vertikalen Kanal an der Außenfläche des Behälterhalses reduziert ist. Wird der Behälter zu stark erwärmt, so deformiert er sich, und das im Behälter befindliche Produkt kann über die reduzierte Dichtungsbreite und den Kanal aus dem umlaufenden Rand des Ventiltellers nach unten entweichen.

Das aus der US 5,199,615 bekannte Sicherungssystem hat den Nachteil, daß es bei einem Aerosolbehälter, bei dem ein dichtes Anliegen des Ventiltellers an der Innenfläche des Behälterhalses vorkommt, nicht funktioniert.

Der Erfindung liegt die Aufgabe zu Grunde, einen Aerosolbehälter der eingangs beschriebenen Art, bei dem der Ventilteller dicht an der Innenfläche des Behälterhalses anliegt, mit einem funktionstüchtigen Sicherungssystem auszustatten.

Gelöst ist die Aufgabe dadurch, daß an der Innenfläche des Behälterhalses ein vom Behälterinnenraum zur Dichtung hin verlaufender Kanal vorgesehen ist, und daß am Kanal die Dichtungsschwachstelle vorgesehen ist.

Die gefundene Lösung hat den Vorteil, daß ein funktionstüchtiges Sicherungssystem für einen Aerosolbehälter, bei dem der Ventilteller dicht an der Innenfläche des Behälterhalses anliegt, vorgesehen ist. Da an der Innenfläche des Behälterhalses ein vom Behälterinnenraum zur Dichtung hin verlaufender Kanal vorgesehen ist, kann ein an der Innenfläche des Behälterhalses anlegbarer Ventilteller, in den Behälterbals eingesetzt werden. Der Ventilteller hat somit einen besonders genauen Sitz im Behälterhals. Der Kanal dient dazu, eine Verbindung zwischen dem Behälterinnenraum und einer Dichtungsschwachstelle zu schaffen. Wird der Behälter erwärmt, so steigt der Druck im Behälter. Besteht der Behälter aus Kunststoff, so kann zusätzlich der Behälterhals weicher werden und sich deformieren. Unabhängig davon, ob ein metallischer Behälter oder ein Behälter aus Kunststoff vorgesehen ist, wird der erhöhte Druck durch den Kanal direkt auf die Dichtungsschwachstelle geleitet. Dort wird bei genügend hohem Innendruck Produkt aus dem Behälter abgegeben. Prinzipiell kann der Kanal durch eine Aussparung im Behälterhals oder an dem an der Innenfläche des Behälterhalses anliegenden Teil des Ventiltellers vorgesehen werden.

Weitere, vorteilhafte Ausgestaltungen der Erfindung sind in den Ansprüchen 2 bis 6 vorgesehen.

Als relativ einfach zu realisierende und zuverlässige Dichtungsschwachstelle ist eine Aussparung in der umlaufenden Stirnfläche des Behälterhalses geeignet, die die gesamte Breite der Stirnfläche nicht durchsetzt, und derart die Dichtungsbreite reduziert (Anspruch 2). Ist die Aussparung eine Nut (Anspruch 3), so kann sie in einfacher Weise in der Stirnfläche vorgesehen werden.

Die Dichtungsschwachstelle wird weiter verbessert, wenn gemäß Anspruch 4 eine umlaufende Dichtnase auf der Stirnfläche vorgesehen ist, die am Kanal eine Unterbrechung aufweist. Zum einen ist die Dichtung dadurch geschwächt, daß die Dichtnase unterbrochen ist. Zum anderen ist eine Deformation des Behälterhalses an der Unterbrechung wahrscheinlicher als an der Dichtnase, da an der Unterbrechung infolge des Materialmangels die Zusammenhaltkraft zwischen dem Behälterhals und dem Ventildeckel reduziert ist. Da die Höhe der Dichtnase deutlich geringer als die Höhe der Dichtnase ist, kommt es für den Fall normalen Innendrucks auch im Bereich der Unterbrechung zu einer sicheren Abdichtung des Aerosolbehälters.

Insgesamt vier Kanäle und vier Dichtungsschwachstellen am Behälterhals (Anspruch 5) erwiesen sich als günstig für ein gutes Zentrieren des Ventildeckels im Behälterhals, insbesondere, wenn die Kanäle um jeweils 90 Grad zueinander versetzt am Behälterhals vorgesehen sind (Anspruch 6).

Im folgenden wird die Erfindung an Hand ein Ausführungsbeispiel darstellender Figuren näher beschrieben. Es zeigt:

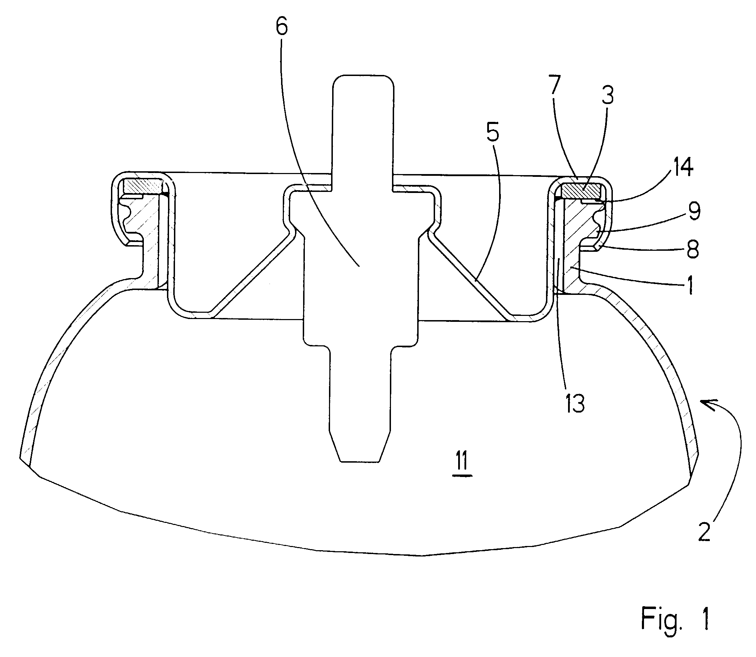

- Figur 1: in einem teilweisen Vertikalschnitt einen Behälterhals eines Aerosolbehälters mit einem eingesetzten Ventilteller, einer umlaufenden Dichtung zwischen einer ringförmigen Stirnfläche des Behälterhalses und dem Rand des Ventiltellers, einem Ventil, einer Dichtungsschwachstelle in Form einer Nut an der Stirnfläche, und einem zwischen dem Ventilteller und dem Behälterhals verlaufenden, den Behälterinnenraum mit der Dichtungsschwachstelle verbindenden Kanal;

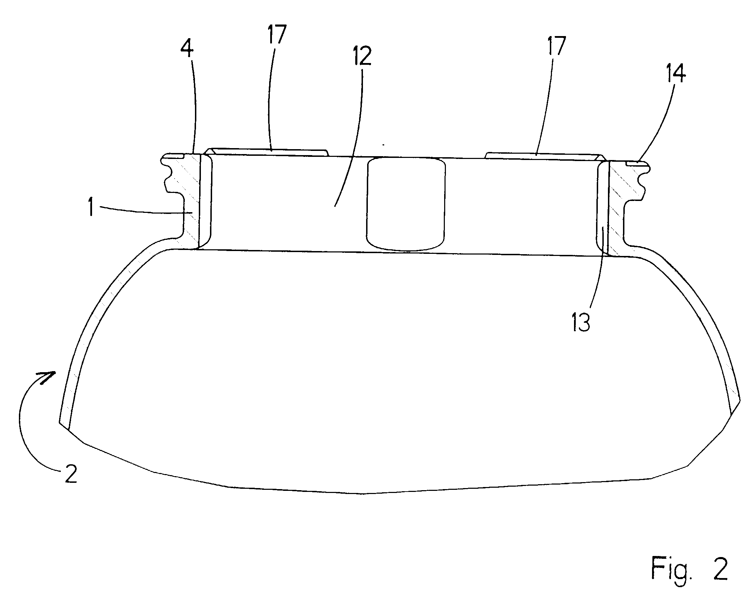

- Figur 2: in einer Seitenansicht mit teilweisem Vertikalschnitt den Behälterhals der Figur 1, jedoch ohne Ventilteller, Ventil und Dichtung;

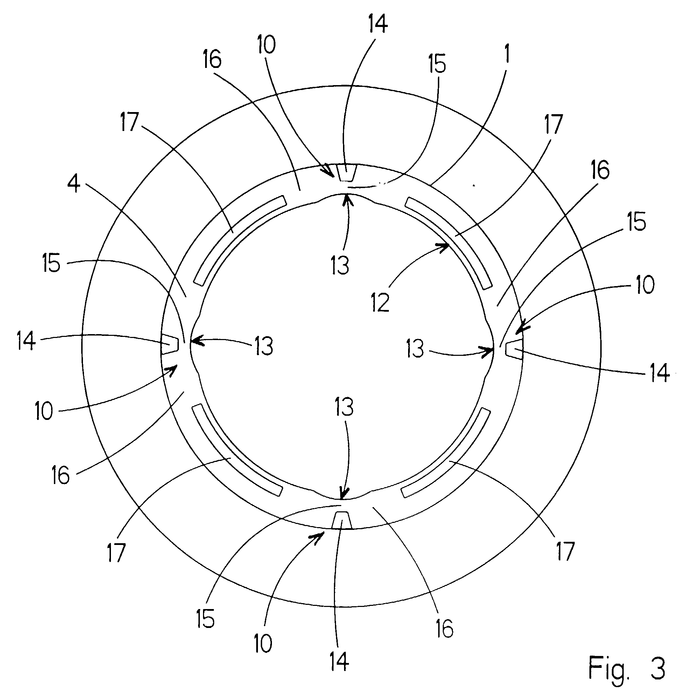

- Figur 3: in einer Draufsicht von oben die Stirnfläche des Behälterhalses, mit vier Dichtungsschwachstellen in Form einer die Breite der Stirnfläche nicht durchsetzenden Nut in einer Unterbrechung einer umlaufenden Dichtnase, und mit jeweils einem Kanal an einer Dichtungsschwachstelle, sowie

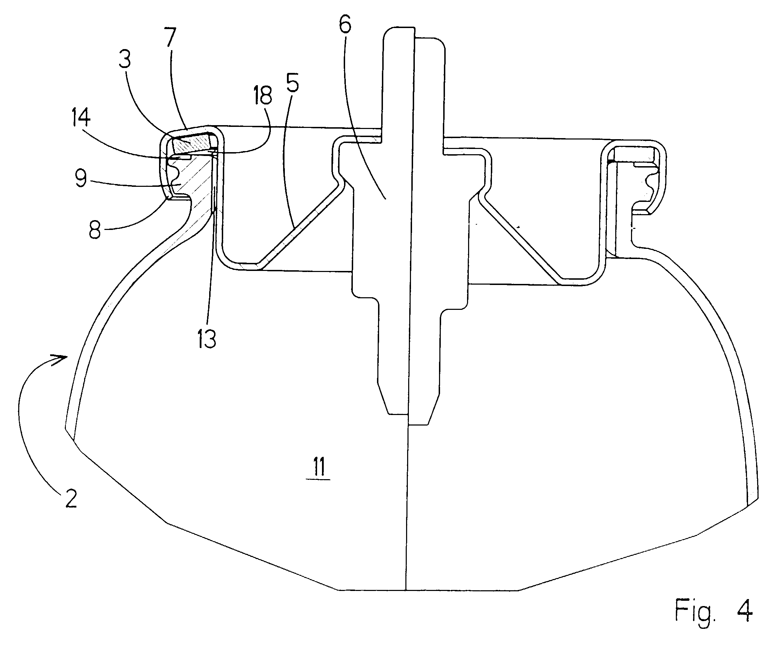

- Figur 4: in einem teilweisen Vertikalschnitt den Gegenstand der Figur 1, jedoch in einem Zustand zu hohen Innendrucks im Behälter und mit geöffneter Dichtungsschwachstelle.

Am Behälterhals 1 eines Aerosolbehälters 2 ist eine umlaufende Dichtung 3 zwischen einer ringförmigen Stirnfläche 4 des Behälterhalses 1 und einem Ventilteller 5 vorgesehen, um den Aerosolbehälter 2 abzudichten. Der Ventilteller 5 trägt mittig ein Ventil 6 zum Abgeben von im Aerosolbehälter 2 befindlichem Produkt. Der Aerosolbehälter 2 besteht aus Kunststoff. Der Rand 7 des Ventiltellers 5 liegt auf der Dichtung 3 auf.Eine Umformung 8 des Randes 7 untergreift einen umlaufenden Wulst 9.

Im Bereich der Dichtung 9 sind drei Dichtungsschwachstellen 10 vorgesehen, an denen bei einer ungewünschten Druckerhöhung im Innenraum 11 des Aerosolbehälters 2, z. B. durch Erwärmung des Aerosolbehälters 2, Produkt aus dem Aerosolbehälter 2 ausströmen kann. An der Innenfläche 12 des Behälterhalses 1 sind vier zur Dichtung 3 hin verlaufende Kanäle 13 vorgesehen. Jeder Kanal 13 verläuft vom Innenraum 11 zu einer Dichtungsschwachstelle 10 hin und überträgt den im Innenraum 11 herrschenden Druck bis an diese Dichtungsschwachstelle 10. Die vier Kanäle 13 werden dadurch gebildet, daß in der Innenfläche 12 des Behälterhalses 1 vier Rinnen vorgesehen sind. Bei Einsatz des rotationssymmetrischen Ventiltellers 5 in den Behälterhals 1 bleiben die Rinnen frei und dienen als Kanäle 13. Die vier Kanäle 13 und die vier Dichtungsschwachstellen 10 sind um jeweils 90 Grad zueinander versetzt am Behälterhals 1 vorgesehen.

Als Dichtungsschwachstelle 10 ist in der Stirnfläche 4 eine Aussparung 14 vorgesehen, welche die Breite der Stirnfläche 4 nicht durchsetzt und derart die Breite der Dichtung 3 auf eine relativ geringe Dichtungsbreite 15 reduziert. Die Aussparung 14 ist eine Nut. Als zusätzliche Dichtungsschwachstelle 10 fungiert eine Unterbrechung 16 einer auf der Stirnfläche 4 umlaufenden Dichtnase 17 an einem Kanal 13. Die Höhe der Dichtnase 17 ist deutlich geringer als die Höhe der Dichtung 3. Außer einer Verringerung der Dichtfunktion reduziert die Unterbrechung 16 noch die Stabilität der Verbindung zwischen Behälterhals 1 und Ventilteller 5. Auch eine Aussparung 14 und ein Kanal 13 schwächen den Behälterhals lokal.

Bei einer ungewünschten Erwärmung des Aerosolbehälters 2 deformiert sich entweder der Behälterhals 1, oder der Ventilteller 5 neigt sich oder beides kommt gleichzeitig vor. Im Aerosolbehälter 2 befindliches Produkt ist dabei in Gasform in den Kanälen 13 vorhanden. An einer Dichtungsschwachstelle 10 führt die Deformation oder das Neigen des Ventiltellers 5 dazu, daß eine Austrittsöffnung 18 zwischen der Stirnfläche 4 und der Dichtung 3 entsteht, durch die Produkt aus dem Aerosolbehälter 2 ausströmt.

## Patentansprüche

1. Aerosolbehälter mit einem Behälterhals, einem Ventilteller am Behälterhals, einer umlaufenden Dichtung zwischen einer ringförmigen Stirnfläche des Behälterhalses und dem Rand des Ventiltellers, einer Dichtungsschwachstelle im Bereich der Dichtung, sowie einem Ventil am Ventilteller, dadurch gekennzeichnet, daß an der Innenfläche (12) des Behälterhalses (1) ein vom Innenraum (11) des Aerosolbehälters (2) zur Dichtung (3) hin verlaufender Kanal (13) vorgesehen ist, und daß am Kanal (13) die Dichtungsschwachstelle (10) vorgesehen ist.

2. Aerosolbehälter nach Anspruch 1, dadurch gekennzeichnet, daß als Dichtungsschwachstelle (10) in der Stirnfläche (4) eine Aussparung (14) vorgesehen ist, welche die Breite der Stirnfläche (4) nicht durchsetzt und derart die Dichtungsbreite (15) reduziert.

3. Aerosolbehälter nach Anspruch 2, dadurch gekennzeichnet, daß die Aussparung (14) eine Nut ist.

4. Aerosolbehälter nach Anspruch 1 oder Anspruch 2, dadurch gekennzeichnet, daß eine umlaufende Dichtnase (17) auf der Stirnfläche (4) vorgesehen ist, die am Kanal (13) eine Unterbrechung (16) als Dichtungsschwachstelle (10) aufweist, und daß die Höhe der Dichtnase (17) deutlich geringer als die Höhe der Dichtung (3) ist.

5. Aerosolbehälter nach Anspruch 1, Anspruch 2 oder Anspruch 4, dadurch gekennzeichnet, daß insgesamt vier Kanäle (13) und vier Dichtungsschwachstellen (10) am Behälterhals (1) vorgesehen sind.

6. Aerosolbehälter nach Anspruch 5, dadurch gekennzeichnet, daß die Kanäle (13) um jeweils 90 Grad zueinander versetzt am Behälterhals (1) vorgesehen sind.
